# EUROPEAN PATENT APPLICATION

(11) **EP 4 741 737 A1**
(43) Date of publication of application: **13.05.2026**
(21) Application number: 25834844.0
(22) Date of filing: 06.08.2025
(51) Int. Cl.: F25B 41/26, F16K 11/07

(54) **HEAT SOURCE UNIT**

(30) Priority: 24.09.2024 JP 2024165246
(71) Applicant: Daikin Industries, Ltd., Osaka-shi, Osaka 530-0001 (JP)
(72) Inventor: HAMADATE, Junichi, Osaka-shi, Osaka 530-0001 (JP); KOIKE, Fumiaki, Osaka-shi, Osaka 530-0001 (JP); KINOSHITA, Atsushi, Osaka-shi, Osaka 530-0001 (JP); ISHIYAMA, Taichi, Osaka-shi, Osaka 530-0001 (JP)
(74) Representative: Hoffmann Eitle
(86) International application number: PCT/JP2025/027951
(87) International publication number: WO 2026/070050

(57) **Abstract**

A heat source unit connected to a utilization unit (12) via a connection pipe (13) includes a flow path switching unit (18) including a valve body (60) having a first passage (61, 62) through which a refrigerant flows, and a casing (32) that rotatably accommodates the valve body (60) and has a first refrigerant flow path (36d) through which a refrigerant flows, and a controller (26) that controls a rotation of the valve body (60), in which the connection pipe (13) is connected to the first refrigerant flow path (36d), and the controller (26) controls the rotation of the valve body (60) between a first state in which the first refrigerant flow path (36d) is closed by an outer surface (60a) of the valve body (60) not having the first passage (61, 62) and a second state in which the first passage (61, 62) communicates with the first refrigerant flow path (36d).

## Description

### TECHNICAL FIELD

The present disclosure relates to a heat source unit.

### BACKGROUND ART

Some air conditioners that adjust indoor temperature and humidity include an outdoor unit (heat source unit) and an indoor unit (utilization unit). The outdoor unit accommodates a compressor, a four-way switching valve, an outdoor heat exchanger, a shutoff valve, and the like, and the indoor unit accommodates an indoor heat exchanger. These devices are connected by a refrigerant pipe to constitute a refrigerant circuit.

### CITATION LIST

### [PATENT LITERATURE]

PATENT LITERATURE 1: Japanese Laid-Open Patent Publication No. 2020-79645

### SUMMARY OF THE INVENTION

### [TECHNICAL PROBLEM]

Since many devices such as a compressor, a four-way switching valve, an outdoor heat exchanger, and a shutoff valve are accommodated in the outdoor unit, and these devices are connected by the refrigerant pipe, reductions in size and cost are difficult.

An object of the present disclosure is to provide a heat source unit that can be reduced in size and cost.

### [SOLUTION TO PROBLEM]

(1) A heat source unit of the present disclosure is connected to a utilization unit via a connection pipe, and includes
   a flow path switching unit including
   a valve body having a first passage through which a refrigerant flows, and
   a casing that rotatably accommodates the valve body and has a first refrigerant flow path through which a refrigerant flows, and
   a controller that controls a rotation of the valve body,
   in which
   the connection pipe is connected to the first refrigerant flow path, and
   the controller controls the rotation of the valve body between a first state in which the first refrigerant flow path is closed by an outer surface of the valve body not having the first passage and a second state in which the first passage communicates with the first refrigerant flow path.

In the above configuration, the first refrigerant flow path to which the connection pipe is connected can be closed by using the valve body accommodated in the casing of the flow path switching unit, and the flow path switching unit can be substantially used as a shutoff valve. Therefore, the shutoff valve and the refrigerant pipe connected to the shutoff valve can be eliminated or reduced, and the heat source unit can be downsized and reduced in cost.

(2) The heat source unit (1) further includes a pressing unit that presses the outer surface of the valve body against a periphery of the first refrigerant flow path in the first state.

In the above configuration, the first refrigerant flow path can be reliably closed by pressing the outer surface of the valve body against the periphery of the first refrigerant flow path.

(3) In the heat source unit according to (2), the pressing unit is a refrigerant leaking between the outer surface of the valve body and an inner surface of the casing in the second state.

In the above configuration, the valve body can be pressed against the periphery of the first refrigerant flow path by using the leaking refrigerant.

(4) In the heat source unit according to any one of (1) to (3), the casing has a second refrigerant flow path and a third refrigerant flow path through which the refrigerant flows, and in the second state, the controller causes the first refrigerant flow path and the second refrigerant flow path or the first refrigerant flow path and the third refrigerant flow path to communicate with each other by the first passage.

In the above configuration, a valve (three-way valve or the like) capable of switching and connecting at least three refrigerant flow paths can function as a shutoff valve.

(5) In the heat source unit according to (4),
the casing has a fourth refrigerant flow path through which the refrigerant flows,
the valve body has a second passage through which the refrigerant flows, and
in the second state, the controller causes the fourth refrigerant flow path and the third refrigerant flow path or the fourth refrigerant flow path and the second refrigerant flow path to communicate with each other by the second passage.

In the above configuration, a valve (four-way switching valve or the like) capable of switching and connecting at least four refrigerant flow paths can function as a shutoff valve.

(6) In the heat source unit according to any one of (1) to (5),
the valve body and the casing are made of synthetic resin, and
the flow path switching unit includes a second casing made of metal, the second casing covering an outside of the casing.

In the above configuration, by forming the valve body and the casing with synthetic resin, weight reduction and formation of the first passage and the first refrigerant flow path can be easily performed, and by providing the second casing made of metal, pressure resistance of the casing made of synthetic resin can be supplemented.

### BRIEF DESCRIPTION OF DRAWINGS

[FIG. 1] FIG. 1 is a schematic diagram of a refrigerant circuit of a refrigeration cycle apparatus including a flow path switching unit according to Embodiment 1 of the present disclosure.
[FIG. 2] FIG. 2 is a perspective view of the flow path switching unit.
[FIG. 3] FIG. 3 is an exploded perspective view of the flow path switching unit.
[FIG. 4] FIG. 4 is a perspective view of a divided body of an inner casing of the flow path switching unit.
[FIG. 5] FIG. 5 is a perspective view of a valve body of the flow path switching unit.
[FIG. 6] FIG. 6 is a sectional view of the flow path switching unit.
[FIG. 7] FIG. 7 is a sectional view for describing an action of the flow path switching unit in a first mode.
[FIG. 8] FIG. 8 is a sectional view for describing an action of the flow path switching unit in a second mode.
[FIG. 9] FIG. 9 is a sectional view for describing an action of the flow path switching unit in a third mode.
[FIG. 10] FIG.10 is a perspective view of a valve body of a flow path switching unit according to Embodiment 2.
[FIG. 11] FIG. 11 is a perspective view of a flow path switching unit according to Embodiment 3.
[FIG. 12] FIG. 12 is a sectional view of the flow path switching unit according to Embodiment 3.

### DETAILED DESCRIPTION

Embodiments of the present disclosure will be described in detail with reference to the accompanying drawings.

### [Embodiment 1]

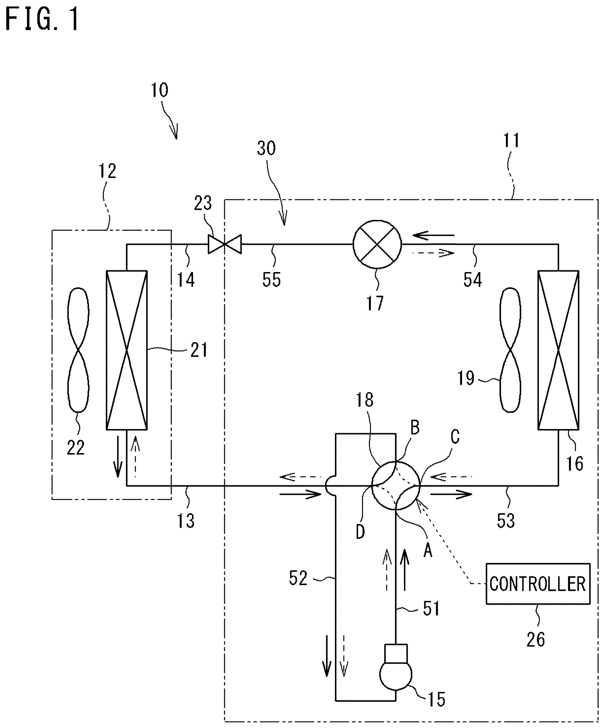

FIG. 1 is a schematic diagram of a refrigerant circuit of a refrigeration cycle apparatus including a flow path switching unit according to Embodiment 1 of the present disclosure.

A refrigeration cycle apparatus 10 includes a refrigerant circuit 30 that executes vapor compression refrigeration cycle operation. The refrigeration cycle apparatus 10 according to the present embodiment is an air conditioner. As shown in FIG. 1, the air conditioner 10 includes an outdoor unit (heat source unit) 11 and an indoor unit (utilization unit) 12. The outdoor unit 11 and the indoor unit 12 are connected by connection pipes 13 and 14, respectively. The outdoor unit 11, the indoor unit 12, and the connection pipes 13 and 14 form the refrigerant circuit 30. The refrigeration cycle apparatus 10 is not limited to an air conditioner but may be a refrigerator, a freezer, a hot-water supplier, a ventilator, or the like.

### (Configuration of refrigerant circuit 30)

As shown in FIG. 1, the outdoor unit 11 is provided with a compressor 15, an outdoor heat exchanger (heat-source heat exchanger; second heat exchanger) 16, an expansion valve 17, and a four-way switching valve (flow path switching unit) 18 constituting the refrigerant circuit 30. The outdoor unit 11 is also provided with an outdoor fan 19. The indoor unit 12 is provided with an indoor heat exchanger (utilization heat exchanger; first heat exchanger) 21 constituting the refrigerant circuit 30. The indoor unit 12 is also provided with an indoor fan 22.

The compressor 15 is, for example, a positive displacement compressor such as a scroll type or a rotary type, and incorporates a compressor motor. The compressor 15 compresses a low-pressure refrigerant sucked from a suction pipe 52 and then discharges the compressed refrigerant from a discharge pipe 51. In the outdoor unit 11, a discharge side of the compressor 15 is connected to a port A of the four-way switching valve 18 via the discharge pipe 51. A suction side of the compressor 15 is connected to a port B of the four-way switching valve 18 via the suction pipe 52.

The outdoor heat exchanger 16 includes a cross-fin type fin-and-tube heat exchanger, a microchannel heat exchanger, or the like. A gas-side end of the outdoor heat exchanger 16 is connected to a port C of the four-way switching valve 18 via a refrigerant pipe 53. A liquid-side end of the outdoor heat exchanger 16 is connected to one end of the expansion valve 17 via a refrigerant pipe 54.

The expansion valve 17 is, for example, an electric valve whose opening degree is adjustable. The other end of the expansion valve 17 is connected to a liquid-side shutoff valve 23 via a refrigerant pipe 55.

The indoor heat exchanger 21 includes a cross-fin type fin-and-tube heat exchanger, a microchannel heat exchanger, or the like. A liquid-side end of the indoor heat exchanger 21 is connected to the liquid-side shutoff valve 23 via the liquid-side connection pipe 14. A gas-side end of the indoor heat exchanger 21 is connected to a port D of the four-way switching valve 18 via a gas-side connection pipe 13.

The four-way switching valve 18 switches a flow path between a first mode (mode indicated by a solid line in FIG. 1) in which the port A and the port C communicate with each other and the port B and the port D communicate with each other and a second mode (mode indicated by a dotted line in FIG. 1) in which the port A and the port D communicate with each other and the port B and the port C communicate with each other. In the first mode, the refrigerant discharged from the compressor 15 flows to the outdoor heat exchanger 16, and in the second mode, the refrigerant discharged from the compressor 15 flows to the indoor heat exchanger 21.

The four-way switching valve 18 according to the present embodiment has a function as a shutoff valve that closes the flow of the refrigerant to the gas-side connection pipe 13. Details will be described later.

The outdoor fan 19 is disposed near the outdoor heat exchanger 16. The outdoor fan 19 is rotationally driven by a motor and blows air to the outdoor heat exchanger 16. The refrigerant flowing inside the outdoor heat exchanger 16 exchanges heat with outdoor air sent by the outdoor fan 19, and evaporates or condenses.

The indoor fan 22 is disposed near the indoor heat exchanger 21. The indoor fan 22 is rotationally driven by a motor and blows air to the indoor heat exchanger 21. The refrigerant flowing inside the indoor heat exchanger 21 exchanges heat with indoor air sent by the indoor fan 22, and condenses or evaporates.

When executing a cooling operation, the air conditioner 10 switches the four-way switching valve 18 to the first mode, and when executing a heating operation, the air conditioner 10 switches the four-way switching valve 18 to the second mode. In the cooling operation, a gas refrigerant discharged from the compressor 15 flows through the four-way switching valve 18 into the outdoor heat exchanger 16 functioning as a condenser, and is condensed into a liquid refrigerant. This liquid refrigerant is decompressed by the expansion valve 17 to become a gas-liquid two-phase refrigerant, and flows into the indoor heat exchanger 21 functioning as an evaporator. The gas-liquid two-phase refrigerant exchanges heat with the air sent by the indoor fan 22 and is evaporated into a gas refrigerant. The air cooled by the heat exchange is supplied into the room. The gas refrigerant flowing out of the indoor heat exchanger 21 is sucked into the compressor 15 through the four-way switching valve 18.

In the heating operation, the gas refrigerant discharged from the compressor 15 flows through the four-way switching valve 18 into the indoor heat exchanger 21 functioning as a condenser. The gas refrigerant exchanges heat with the air sent by the indoor fan 22 and is condensed into a liquid refrigerant. The air heated by the heat exchange is supplied into the room. The liquid refrigerant flowing out of the indoor heat exchanger 21 is decompressed by the expansion valve 17 to become a gas-liquid two-phase refrigerant, and flows into the outdoor heat exchanger 16 functioning as an evaporator. The gas-liquid two-phase refrigerant is evaporated into a gas refrigerant in the outdoor heat exchanger 16. The gas refrigerant is sucked into the compressor 15 through the four-way switching valve 18.

### (Configuration of four-way switching valve (flow path switching unit) 18)

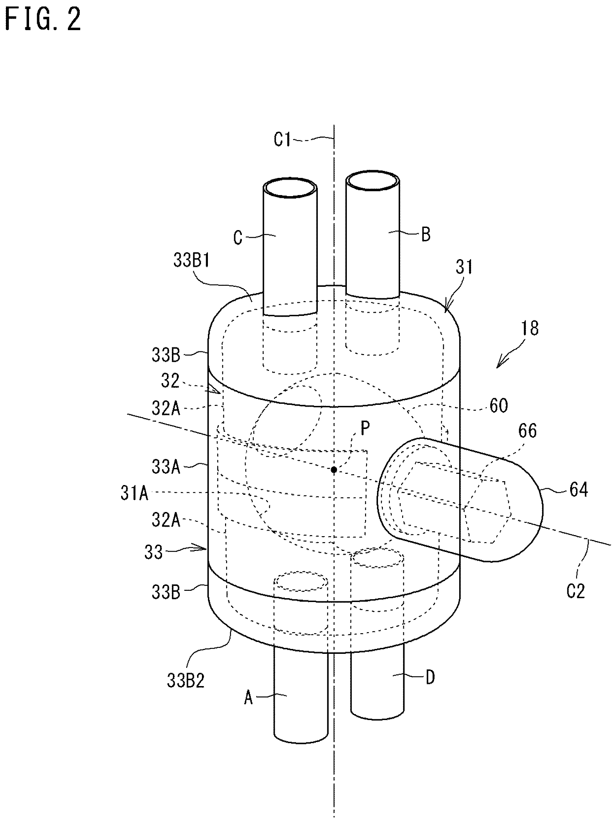

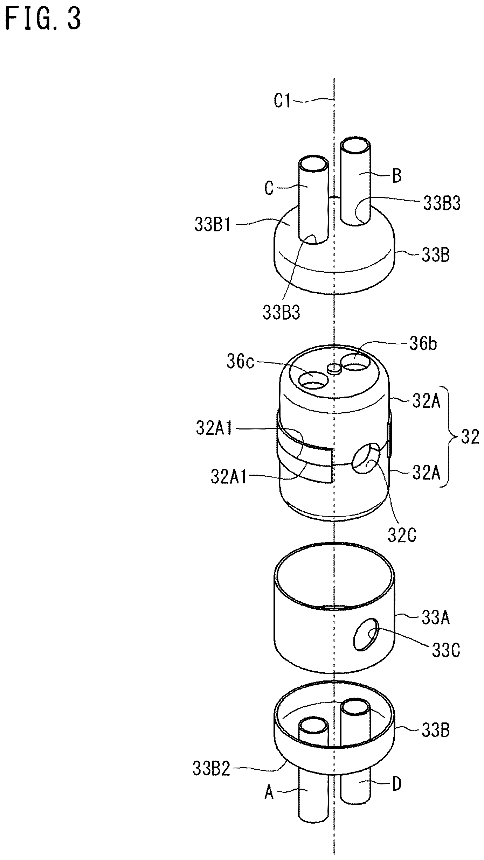

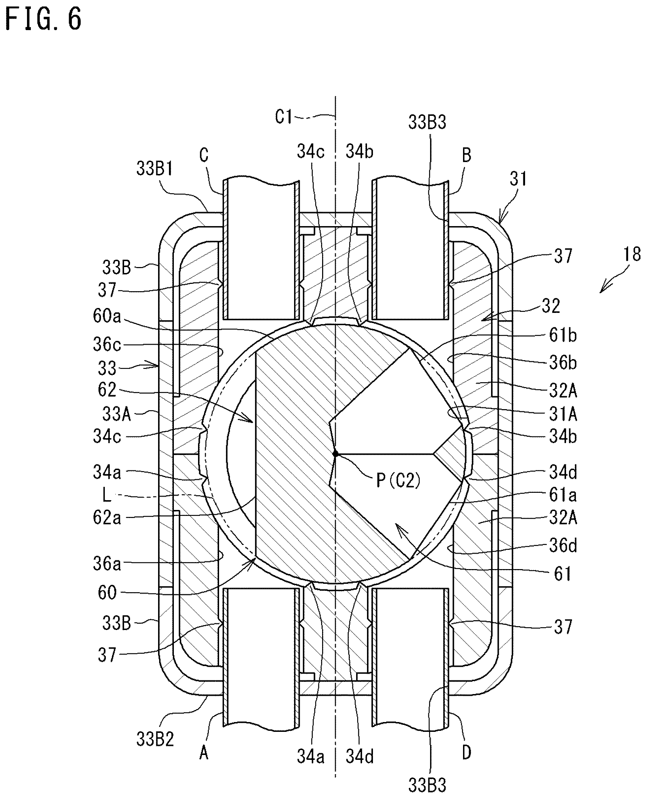

FIG. 2 is a perspective view of the flow path switching unit. FIG. 3 is an exploded perspective view of the flow path switching unit. FIG. 6 is a sectional view of the flow path switching unit.

The four-way switching valve 18 which is a flow path switching unit includes a casing (housing) 31 and a valve body 60. The casing 31 accommodates the valve body 60 therein. The casing 31 has a substantially columnar shape. The casing 31 has two end surfaces located at both ends in a direction (hereinafter also referred to as axial direction) parallel to a center axis C1 of the columnar shape, and a cylindrical outer peripheral surface located between the two end surfaces. The casing 31 has a hollow portion 31A (see FIG. 6) for accommodating the valve body 60 therein. The hollow portion 31A has a spherical shape.

The casing 31 includes an inner casing 32 and an outer casing (outer contour body) 33. The inner casing 32 has a substantially columnar shape. The hollow portion 31A described above is formed inside the inner casing 32. An inner surface of the hollow portion 31A substantially constitutes an inner surface of the inner casing 31. The hollow portion 31A is disposed at a center in the axial direction of the inner casing 32 and at a center in a radial direction. The inner casing 32 is made of, for example, synthetic resin. The inner casing 32 is formed by die molding such as injection molding. Polyamide 66 (PA66), polyphenylene sulfide (PPS), polybutylene terephthalate (PBT), and the like can be adopted as a material of the inner casing 32. However, the material and manufacturing method of the inner casing 32 are not limited to the above.

The inner casing 32 according to the present embodiment includes a plurality of divided bodies 32A. The inner casing 32 is divided by a plane intersecting (orthogonal to) the center axis C1. Specifically, the inner casing 32 is divided into two parts by a plane orthogonal to the center axis C1 at the center in the axial direction. Therefore, the inner casing 32 includes two divided bodies 32A. The inner casing 32 may be constituted by the plurality of divided bodies divided by a plane passing through the center axis C1 or a plane parallel to the center axis C1.

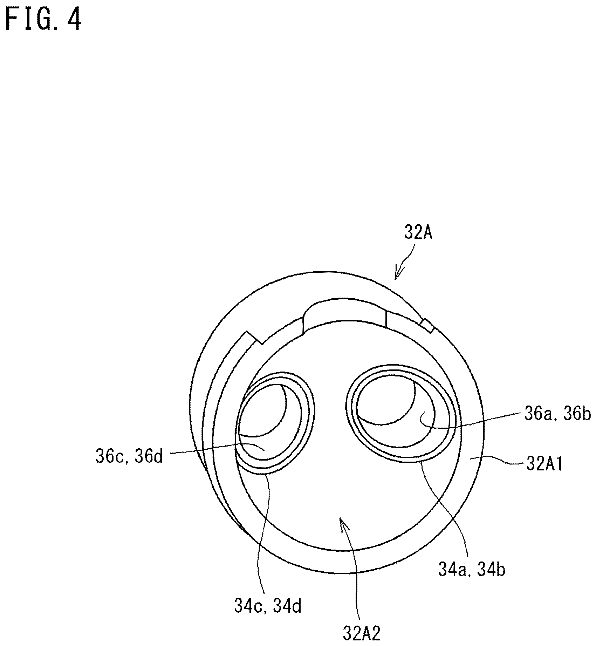

FIG. 4 is a perspective view of a divided body of the inner casing of the flow path switching unit.

As shown in FIGs. 3 and 4, the two divided bodies 32A have the same shape and are arranged in directions opposite to each other in the axial direction. The inner casing 32 is configured by combining one end surface 32A1 and one end surface 32A1 of the two divided bodies 32A in the axial direction so as to face each other. A hemispherical concave portion 32A2 is formed on the one end surface 32A1 in the axial direction of each divided body 32A, and the spherical hollow portion 31A is formed by combining the two concave portions 32A2.

The outer casing 33 covers an outer side of the inner casing 32. The outer casing 33 has a substantially cylindrical shape. The outer casing 33 has a cylindrical body 33A and ends 33B that close both ends of the body 33A in the axial direction. The outer casing 33 is made of metal. The outer casing 33 is made of stainless steel, iron, or the like. The outer casing 33 is formed by sheet metal working or the like. However, the material and manufacturing method of the outer casing 33 are not limited to the above.

The body 33A and the ends 33B of the outer casing 33 are connected by welding or brazing. The body 33A and the ends 33B are closely joined so that the refrigerant does not leak from between the body and the ends. The outer casing 33 protects the inner casing 32 by covering the outer side of the inner casing 32. The outer casing 33 compensates pressure resistance of the inner casing 32 against pressure of the refrigerant applied to the inner casing 32.

Ports A, B, C, and D are provided on both end surfaces of the casing 31 in the axial direction. Each of the ports A to D corresponds to the ports A to D described with reference to FIG. 1. The ports A to D according to the present embodiment have a tubular shape. Other refrigerant pipes 51 to 53 and 13 are connected to the ports A to D, respectively.

The ports A to D are metal pipes. For example, the ports A to D are pipes containing copper as a main component, such as a copper alloy or pure copper. However, the material of the ports A to D is not limited, and a material containing aluminum as a main component, such as aluminum alloy or pure aluminum, stainless steel, iron, or the like may be adopted. The distal ends of the ports A to D to which the other refrigerant pipes 51 to 53 and 13 are connected may be flared.

Instead of tubes, the ports A to D may include refrigerant flow paths 36a to 36d (see FIG. 6; which will be described in detail later) that open at the end surfaces of the casing 31.

The port B and the port C are provided on one end surface 33B1 of the casing 31. The port A and the port D are provided on the other end surface 33B2 of the casing 31. As shown in FIG. 6, the ports A to D communicate with the refrigerant flow paths 36a, 36b, 36c, and 36d penetrating the casing 31 between the end surfaces 33B1 and 33B2 of the casing 31 and the hollow portion 31A. The refrigerant flow paths 36a to 36d are formed substantially parallel to the center axis C1. The ports A to D are inserted into and fixed to the refrigerant flow paths 36a, 36b, 36c, and 36d. Each of the ports A to D is fixed to the outer casing 33 by brazing, welding, or the like.

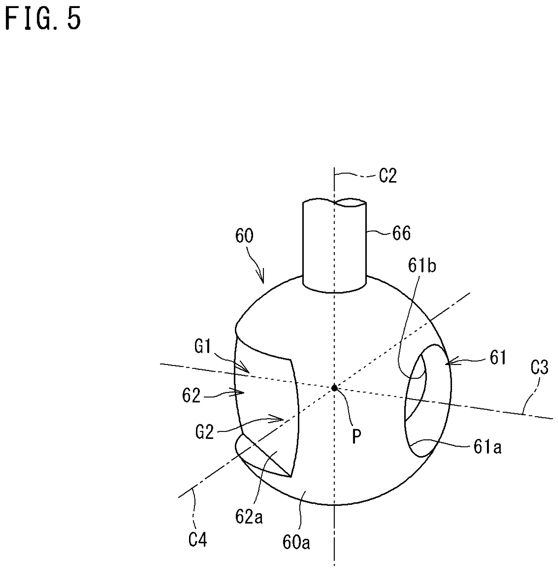

FIG. 5 is a perspective view of the valve body of the flow path switching unit.

As shown in FIGs. 5 and 6, the valve body 60 is disposed in the hollow portion 31A of the casing 31. The valve body 60 has a spherical shape. The outer diameter of the valve body 60 is formed to be slightly smaller than the inner diameter of the inner surface of the hollow portion 31A.

The valve body 60 is made of synthetic resin or metal. The valve body 60 is molded by, for example, die molding such as injection molding or die casting. As a material of the valve body 60, for example, a synthetic resin such as polyamide 66 (PA66) or polyphenylene sulfide (PPS), an aluminum alloy, a material containing aluminum as a main component (hereinafter also simply referred to as "aluminum"), such as pure aluminum, or a steel material such as high carbon chromium bearing steel (SUJ2) is adopted. However, the material and manufacturing method of the valve body 60 are not limited to the above.

The valve body 60 is formed of a material having a tensile elastic modulus higher than a tensile elastic modulus of the material of the inner casing 32. SUJ2, aluminum, PA66, PPS, and PBT, which are listed as materials that can be used for the inner casing 32 and the valve body 60, have lower tensile elastic moduli in that order. Therefore, the materials of the inner casing 32 and the valve body 60 can be selected in the order of those tensile elastic moduli. For example, in a case where the material of the valve body 60 is PPS, PBT can be selected as the material of the inner casing 32, and in a case where the material of the valve body is PA66, PPS or PBT can be selected as the material of the inner casing 32.

By forming the valve body 60 from a material having a tensile elastic modulus higher than the tensile elastic modulus of the material of the inner casing 32, it is possible to suppress wear of the valve body 60 due to contact with seal portions 34a to 34d (which will be described in detail later) formed in the inner casing 32.

As shown in FIGs. 2 and 5, the valve body 60 rotates about a predetermined axial center C2. The axial center C2 of the valve body 60 passes through a center P of the spherical shape of the valve body 60 and intersects (is orthogonal to) the center axis C1 of the casing 31. A drive shaft 66 is disposed on the axial center C2. The drive shaft 66 is disposed on the outer peripheral surface of the casing 31. The drive shaft 66 penetrates the casing 31 between the outer peripheral surface and the hollow portion 31A of the casing 31. In the hollow portion 31A, an end of the drive shaft 66 is fixed to the valve body 60. A drive unit 64 is connected to the drive shaft 66 outside the casing 31. The drive shaft 66 is attached to the casing 31 in a sealed state with a seal member or the like so as not to cause leakage of the refrigerant between the drive shaft and the casing.

The drive unit 64 is an electric motor. The drive unit 64 generates and outputs rotational power. As the drive unit 64, an electric motor capable of adjusting a rotational angle of the drive shaft 66, such as a stepping motor, is employed. As shown in FIG. 1, the operation of the drive unit 64 is controlled by a controller 26 of the air conditioner 10, and the drive unit 64 drives the valve body 60 in accordance with an operating state of the air conditioner 10. Specifically, the drive unit 64 is controlled to switch the valve body 60 to a first mode, a second mode, a third mode described later.

Note that the controller 26 includes a processor, a memory, and the like. The processor is, for example, a central processing unit (CPU). The processor may be a graphics processing unit (GPU). The processor may be an application specific integrated circuit (ASIC) or a programmable logic device such as a gate array and a field programmable gate array (FPGA). The ASIC or the programmable logic device is configured to be able to execute processing similar to the processing of the control program. The memory includes a volatile memory such as a static random access memory (SRAM) and a dynamic random access memory (DRAM), or a nonvolatile memory such as a flash memory, a hard disk, and a read only memory (ROM). The nonvolatile memory stores a control program as a computer program, and control data. The controller 26 exhibits various functions when the processor executes the control program.

### (Specific configuration of valve body 60)

FIG. 5 shows a reference axis C3 orthogonal to the axial center C2 of the valve body 60 and a reference axis C4 orthogonal to the axial center C2 and the reference axis C3. The axial center C2, the reference axis C3, and the reference axis C4 intersect each other at the center P of the spherical shape of the valve body 60.

A through hole 61 and a concave portion 62 are formed in the valve body 60. The through hole 61 and the concave portion 62 both constitute a passage for the refrigerant. The through hole 61 is a hole penetrating the valve body 60. On the other hand, the concave portion 62 has a shape in which an outer surface 60a of the valve body 60 is recessed.

The through hole 61 opens at two positions on the outer surface 60a of the valve body 60. One opening 61a of the through hole 61 is formed on the reference axis C3. The other opening 61b is formed on the reference axis C4. Therefore, as shown in FIG. 6, the through hole 61 has a shape bent in a substantially L shape. The areas of both the openings 61a and 61b are the same. A sectional area of the through hole 61 (an area of a cross section orthogonal to a center line of the through hole 61; a cross-sectional area) is substantially the same as the area of each of the openings 61a and 61b.

The concave portion 62 is formed in a range (range of 90° around the axial center C2) extending between a position G1 disposed on an opposite side of one opening 61a of the through hole 61 on the reference axis C3 and a position G2 disposed on an opposite side of the other opening 61b of the through hole 61 on the reference axis C4 on the outer surface 60a of the valve body 60.

A bottom surface 62a of the concave portion 62 is one flat surface. The bottom surface 62a is formed across the position G1 and the position G2. The bottom surface 62a may be constituted by a plurality of flat surfaces or may be constituted by a curved surface. The bottom surface 62a of the concave portion 62 and the two openings of the through hole 61 are disposed at an angle of approximately 45°.

The valve body 60 is not a complete sphere due to the formation of the through hole 61 and the concave portion 62, and is a sphere in which a part of a spherical surface (outer surface 60a) is missing. In FIG. 6, the shape of a complete sphere without a missing part is indicated by an imaginary line L.

### (Switching of flow path by valve body 60)

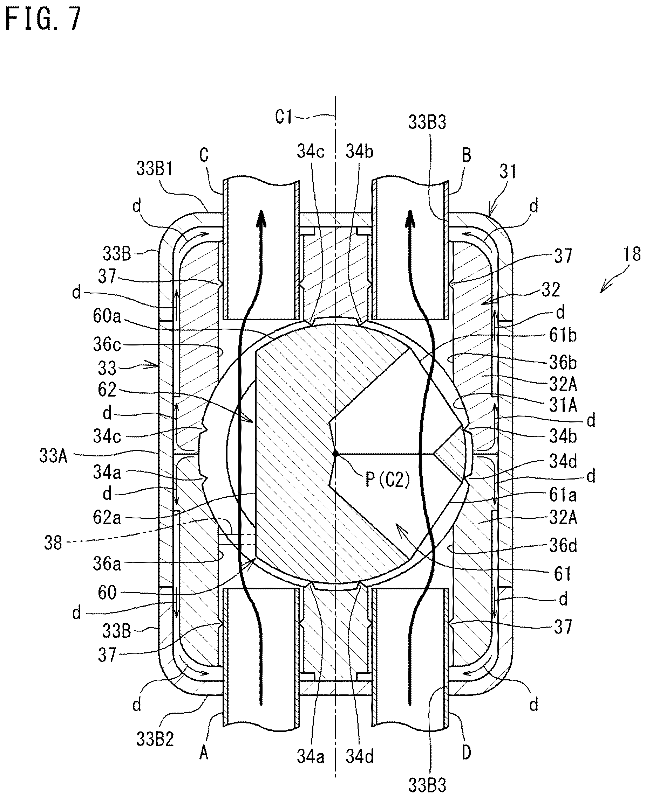

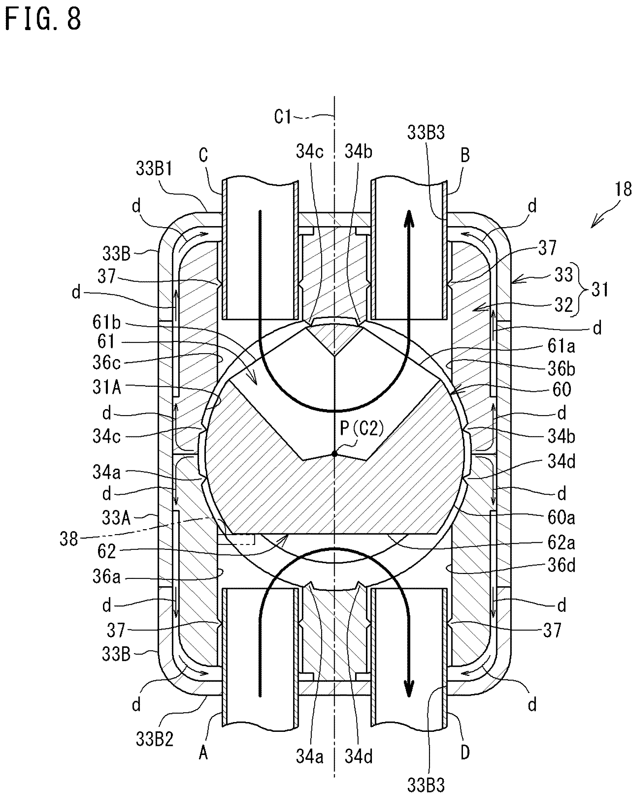

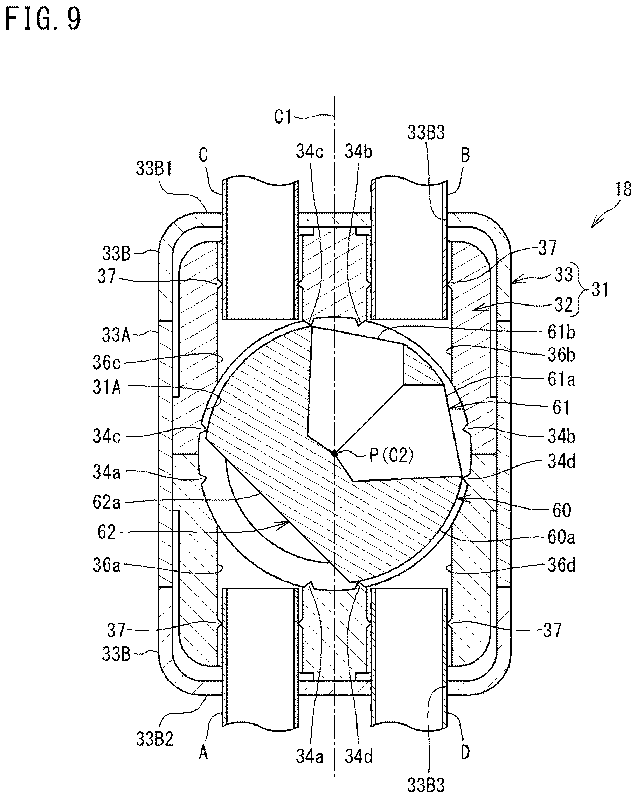

FIG. 7 is a sectional view for describing an action of the flow path switching unit in the first mode. FIG. 8 is a sectional view for describing an action of the flow path switching unit in the second mode. FIG. 9 is a sectional view for describing an action of the flow path switching unit in the third mode.

In the present embodiment, the valve body 60 is switched between the first mode (see FIG. 7) and the second mode (see FIG. 8) by rotating 90 degrees about the axial center C2. The first mode and the second mode are modes of the valve body 60 used when the air conditioner 10 is operated. The valve body 60 according to the present embodiment is switched to the third mode (see FIG. 9) in a case where the air conditioner 10 is not operated, for example, when the air conditioner 10 is transported, installed, removed, or replaced.

In the first mode shown in FIG. 7, the port B and the port D are connected by the through hole 61 of the valve body 60, and the port A and the port C are connected by the concave portion 62. Therefore, as indicated by solid arrows in FIG. 1, the refrigerant discharged from the compressor 15 flows into the four-way switching valve 18 from the port A through the refrigerant pipe 51, passes through the refrigerant flow paths 36a and 36c and the concave portion 62 as shown in FIG. 7, flows out of the four-way switching valve 18 from the port C, and is supplied to the outdoor heat exchanger 16 via the refrigerant pipe 53 as shown in FIG. 1. The refrigerant flowing out of the indoor heat exchanger 21 flows into the four-way switching valve 18 from the port D through the connection pipe 13, flows out of the four-way switching valve 18 from the port B through the refrigerant flow paths 36d and 36b and the through hole 61 as shown in FIG. 7, and is sucked into the compressor 15. Thus, the air conditioner 10 can execute the cooling operation.

In the second mode shown in FIG. 8, the port B and the port C are connected by the through hole 61 of the valve body 60, and the port A and the port D are connected by the concave portion 62. Therefore, as indicated by dotted arrows in FIG. 1, the refrigerant discharged from the compressor 15 flows into the four-way switching valve 18 from the port A through the refrigerant pipe 51, flows out of the four-way switching valve 18 from the port D through the refrigerant flow paths 36a and 36d and the concave portion 62 as shown in FIG. 8, and is supplied to the indoor heat exchanger 21 through the connection pipe 13 as shown in FIG. 1. The refrigerant flowing out of the outdoor heat exchanger 16 flows into the four-way switching valve 18 from the port C through the refrigerant pipe 53, flows out of the four-way switching valve 18 from the port B through the refrigerant flow paths 36c and 36b and the through hole 61 as shown in FIG. 8, and is sucked into the compressor 15 through the refrigerant pipe 52. Thus, the air conditioner 10 can execute the heating operation.

In both the first mode and the second mode, the rotation of the valve body 60 may be limited so as to be reliably positioned at a predetermined rotational position. For example, a stopper may be provided either on the valve body 60 or the drive shaft 66 or on the casing 31, and the rotation of the valve body 60 may be restricted by bringing the stopper into contact with the other. FIGs. 7 and 8 show an example in which the stopper 38 is provided in the inner casing 32 of the casing 31. The stopper 38 comes into contact with the valve body 60 in both of the first and second modes to limit a rotation amount of the valve body 60, and can position the valve body 60 at a predetermined rotational position.

As shown in FIGs. 7 and 8, the through hole 61 always communicates with the port B, and selectively communicates with the port D and the port C as the valve body 60 rotates about the axial center C2. Since the port B is connected to the suction pipe 52 of the compressor 15, the through hole 61 always communicating with the port B serves as a passage (first passage) through which the "low-pressure refrigerant" flows.

The concave portion 62 always communicates with the port A, and selectively communicates with the port C and the port D by the valve body 60 rotating about the axial center C2. Since the port A is connected to the discharge pipe 51 of the compressor 15, the concave portion 62 always communicating with the port A serves as a passage (second passage) through which the "high-pressure refrigerant" flows.

As shown in FIGs. 4 and 6, the seal portions 34a, 34b, 34c, and 34d are integrally formed on the inner surface of the hollow portion 31A of the casing 31 and around the refrigerant flow paths 36a to 36d, respectively. The seal portions 34a to 34d are annular protrusions protruding from the inner surface of the hollow portion 31A. Distal ends of the seal portions 34a to 34d are in contact with the outer surface 60a of the valve body 60.

Specifically, in the first mode shown in FIG. 7, the seal portion 34b formed around the refrigerant flow path 36b on the inner surface of the hollow portion 31A is in contact with a periphery of the opening 61b of the through hole 61 on the outer surface 60a of the valve body 60. The seal portion 34d formed around the refrigerant flow path 36d on the inner surface of the hollow portion 31A is in contact with a periphery of the opening 61a of the through hole 61 on the outer surface 60a of the valve body 60.

Therefore, the seal portions 34b and 34d can suppress leakage of the low-pressure refrigerant flowing through the ports B and D, the refrigerant flow paths 36b and 36d, and the through hole 61 into a gap between the outer surface 60a of the valve body 60 and the inner surface of the hollow portion 31A. Similarly, the seal portions 34b and 34d can prevent the refrigerant (high-pressure refrigerant) flowing through a portion other than the ports B and D, the refrigerant flow paths 36b and 36d, and the through hole 61 from flowing into the ports B and D, the refrigerant flow paths 36b and 36d, and the through hole 61. Accordingly, mixing of the low-pressure refrigerant and the high-pressure refrigerant can be suppressed.

On the other hand, some of the seal portions 34a and 34c formed around the refrigerant flow paths 36a and 36c on the inner surface of the hollow portion 31A are in contact with the outer surface 60a of the valve body 60, but the others are located radially outside the concave portion 62 and is not in contact with the outer surface 60a of the valve body 60. Therefore, the high-pressure refrigerant flowing through the ports A and C, the refrigerant flow paths 36a and 36c, and the concave portion 62 leaks into the gap between the outer surface 60a of the valve body 60 and the inner surface of the hollow portion 31A.

When the high-pressure refrigerant leaks into the gap between the outer surface 60a of the valve body 60 and the inner surface of the hollow portion 31A, the pressure of the high-pressure refrigerant is applied to most of the outer surface 60a of the valve body 60 except for the through hole 61. The pressure of the high-pressure refrigerant is also applied to the inside of the concave portion 62 through which the high-pressure refrigerant flows. Therefore, the outer surface 60a of the valve body 60 is strongly pressed against the seal portions 34b and 34d formed around the refrigerant flow paths 36b and 36d.

Accordingly, the seal portions 34b and 34d can further suppress leakage of the low-pressure refrigerant flowing through the ports B and D, the refrigerant flow paths 36b and 36d, and the through hole 61 into the gap between the outer surface 60a of the valve body 60 and the inner surface of the hollow portion 31A. Furthermore, the seal portions 34b and 34d further prevent the high-pressure refrigerant flowing through a portion other than the ports B and D, the refrigerant flow paths 36b and 36d, and the through hole 61, in other words, the high-pressure refrigerant flowing through the ports A and C, the refrigerant flow paths 36a and 36c, and the concave portion 62, and the high-pressure refrigerant leaking therefrom from flowing into the ports B and D, the refrigerant flow paths 36b and 36d, and the through hole 61.

In the second mode shown in FIG. 8, the seal portion 34b formed around the refrigerant flow path 36b on the inner surface of the hollow portion 31A is in contact with a periphery of the opening 61a of the through hole 61 on the outer surface 60a of the valve body 60. The seal portion 34c formed around the refrigerant flow path 36c on the inner surface of the hollow portion 31A is in contact with a periphery of the opening 61a of the through hole 61 on the outer surface 60a of the valve body 60.

Therefore, the seal portions 34b and 34c can suppress leakage of the low-pressure refrigerant flowing through the ports B and C, the refrigerant flow paths 36b and 36c, and the through hole 61 into a gap between the outer surface 60a of the valve body 60 and the inner surface of the hollow portion 31A. Furthermore, the seal portions 34b and 34c can prevent the refrigerant (high-pressure refrigerant) flowing through a portion other than the ports B and C, the refrigerant flow paths 36b and 36c, and the through hole 61 from flowing into the ports B and C, the refrigerant flow paths 36b and 36c, and the through hole 61. Accordingly, mixing of the low-pressure refrigerant and the high-pressure refrigerant can be suppressed.

On the other hand, some of the seal portions 34a and 34d formed around the refrigerant flow paths 36a and 36d on the inner surface of the hollow portion 31A are in contact with the outer surface 60a of the valve body 60, but the others are located radially outside the concave portion 62 and is not in contact with the outer surface 60a of the valve body 60. Therefore, the refrigerant flowing through the ports A and D, the refrigerant flow paths 36a and 36d, and the concave portion 62 leaks into the gap between the outer surface 60a of the valve body 60 and the inner surface of the hollow portion 31A.

As described above, when the high-pressure refrigerant leaks into the gap between the outer surface 60a of the valve body 60 and the inner surface of the hollow portion 31A, the pressure of the high-pressure refrigerant is applied to most of the outer surface 60a of the valve body 60 except for the through hole 61. The pressure of the high-pressure refrigerant is also applied to the inside of the concave portion 62 through which the high-pressure refrigerant flows. Therefore, the valve body 60 is strongly pressed against the seal portions 34b and 34c formed around the refrigerant flow paths 36b and 36c.

Accordingly, the seal portions 34b and 34c can further suppress leakage of the low-pressure refrigerant flowing through the ports B and C, the refrigerant flow paths 36b and 36c, and the through hole 61 into the gap between the outer surface 60a of the valve body 60 and the inner surface of the hollow portion 31A. Furthermore, the seal portions 34b and 34c further prevent the high-pressure refrigerant flowing through a portion other than the ports B and C, the refrigerant flow paths 36b and 36d, and the through hole 61, in other words, the high-pressure refrigerant flowing through the ports A and D, the refrigerant flow paths 36a and 36d, and the concave portion 62, and the high-pressure refrigerant leaking therefrom from flowing into the ports B and C, the refrigerant flow paths 36b and 36c, and the through hole 61.

The seal portions 34a to 34d are formed integrally with the inner casing 32. Therefore, the number of parts can be reduced as compared with the case where the seal portions 34a to 34d are formed separately from the inner casing 32. Since the inner casing 32 is made of synthetic resin, the seal portions 34a to 34d can be easily integrally molded by die molding.

Since only the high-pressure refrigerant flows through the port A of the four ports A to D, the seal portion 34a formed around the port A is not substantially used. Therefore, the seal portion 34a may be omitted. However, if the seal portion 34a is omitted, the two divided bodies 32A constituting the inner casing 32 cannot be the same part. Therefore, from the viewpoint of manufacturing cost, it is preferable to form the seal portions 34a to 34d around all the ports A to D.

The divided bodies 32A of the inner casing 32 are only butted against each other at the end surfaces 32A1, but are not bonded to each other. Therefore, as indicated by an arrow d in FIGs. 7 and 8, the high-pressure refrigerant leaks from between the both end surfaces 32A1 to the outside of the inner casing 32. The high-pressure refrigerant having leaked flows into the inner side of the outer casing 33. However, in the outer casing 33, the plurality of divided bodies (the body 33A and the ends 33B) are tightly joined to each other by welding or the like, and thus, leakage from between the divided bodies is suppressed.

The ports A to D, which are tubes, are inserted into an opening 33B3 formed in the end 33B of the outer casing 33, and are joined by welding or brazing. Therefore, the refrigerant is prevented from leaking from between outer peripheral surfaces of the ports A to D and the outer casing 33.

The ports A to D which are tubes are inserted into the refrigerant flow paths 36a to 36d in the inner casing 32. In the present embodiment, a seal portion 37 is provided between the outer peripheral surface of the pipe constituting the ports A to D and the refrigerant flow paths 36a to 36d. The seal portion 37 is annularly formed along a circumferential direction on inner peripheral surfaces of the refrigerant flow paths 36a to 36d. The seal portion 37 is integrally formed on the inner peripheral surfaces of the refrigerant flow paths 36a to 36d.

Therefore, the refrigerant leaking from the end surface 32A1 of the inner casing 32 and flowing between the outer surface of the inner casing 32 and the inner surface of the outer casing 33 as indicated by the arrow d is prevented from passing between the refrigerant flow paths 36a to 36d and the ports A to D and entering the hollow portion 31A. Similarly to the seal portions 34a to 34d, the seal portion 37 can be integrally molded when the divided body 32A of the inner casing 32 is die-molded.

### (Closing of flow path by valve body 60)

The four-way switching valve 18 according to the present embodiment has a function as a shutoff valve that interrupts the flow of the refrigerant between the outdoor unit 11 and the indoor unit 12. Specifically, the four-way switching valve 18 functions as a shutoff valve by switching the valve body 60 to the third mode shown in FIG. 9.

In the third mode, the valve body 60 is positioned in the rotational position between the first and second modes. As a result, the refrigerant flow path 36d is closed by the outer surface 60a of the valve body 60. Therefore, as shown in FIG. 1, the connection pipe 13 connected to the refrigerant flow path 36d and the port D is closed, and the flow of the refrigerant (gas refrigerant) between the indoor unit 12 and the outdoor unit 11 is interrupted. In other words, the refrigerant (gas refrigerant) between the compressor 15 and the indoor heat exchanger 21 is interrupted.

In the third mode, the entire seal portion 34d formed around the refrigerant flow path 36d is in contact with the outer surface 60a of the valve body 60. Therefore, leakage of the refrigerant in the refrigerant flow path 36d into the gap between the outer surface 60a of the valve body 60 and the inner surface of the hollow portion 31A is suppressed. Conversely, the refrigerant between the outer surface 60a of the valve body 60 and the inner surface of the hollow portion 31A is prevented from flowing into the refrigerant flow path 36d.

In a case where the air conditioner 10 performs the cooling operation or the heating operation, the valve body 60 takes either the first mode or the second mode, and thus the high-pressure refrigerant is filled between the outer surface 60a excluding the through hole 61 of the valve body 60 and the inner surface of the concave portion 62 and the inner surface of the hollow portion 31A. When the valve body 60 is switched from the first mode or the second mode to the third mode, the high-pressure refrigerant in the hollow portion 31A applies a high pressure to a portion other than the outer surface 60a of the valve body 60 that closes the refrigerant flow path 36d. Therefore, the outer surface 60a of the valve body 60 is pressed against the seal portion 34d formed around the refrigerant flow path 36d on the inner surface of the hollow portion 31A, and the sealability of the seal portion 34d is enhanced. Therefore, the high-pressure refrigerant flowing into the four-way switching valve 18 and leaking into the gap between the outer surface 60a of the valve body 60 and the inner surface of the hollow portion 31A constitutes a pressing unit that presses the outer surface 60a of the valve body 60 against a periphery (the seal portion 34d) of the refrigerant flow path 36d.

When the valve body 60 is in the first mode, the low-pressure refrigerant flows through the refrigerant flow path 36d. Therefore, when the valve body 60 is switched from the first mode to the third mode, the refrigerant flow path 36d is closed by the valve body 60 in a state where the pressure of the refrigerant in the refrigerant flow path 36d is low. Therefore, a higher pressure of the refrigerant is applied to a portion other than the outer surface 60a of the valve body 60 that closes the refrigerant flow path 36d, and the valve body 60 is strongly pressed by the seal portion 34d. Accordingly, the sealability of the seal portion 34d can be further enhanced.

In the present embodiment, the refrigerant flow path 36d and the refrigerant flow path 36c are arranged rotationally symmetrically about the axial center C2 of the valve body 60. The valve body 60 is formed in plane symmetry about a plane passing through the axial center C2. Therefore, the outer surface 60a of the valve body 60 closes the refrigerant flow path 36d and simultaneously closes the refrigerant flow path 36c. Therefore, when the valve body 60 is switched to the third mode, the refrigerant flow path 36c and the refrigerant pipe 53 connected to the port C are closed, and the flow of the refrigerant between the compressor 15 and the outdoor heat exchanger 16 is interrupted. Therefore, in the present embodiment, the flow of the refrigerant between the compressor 15 and the outdoor heat exchanger 16 and the indoor heat exchanger 21 is interrupted by the valve body 60 of the four-way switching valve 18.

The four-way switching valve 18 is controlled by the controller 26. Therefore, the operation of using the four-way switching valve 18 as a shutoff valve (an operation of switching the valve body 60 to the third mode) is also automatically performed under the control of the controller 26. If the valve body 60 is manually switched to the third mode, it is difficult to position the valve body 60 at an appropriate rotational position between the first mode and the second mode, and there is a possibility that the accuracy of the operation varies depending on the operator. In the present embodiment, since the valve body 60 of the four-way switching valve 18 is rotationally driven by the drive unit 64 capable of adjusting the rotational angle under the control of the controller 26, not only in the first mode and the second mode but also in the third mode, the valve body 60 can be positioned at an accurate rotational position to close the refrigerant flow path 36d.

The four-way switching valve 18 is assembled as follows.

First, as shown in FIG. 3, the end surfaces 32A1 are butted against each other in a state where the valve body 60 is accommodated between the two divided bodies 32A constituting the inner casing 32. Next, the body 33A of the outer casing 33 is fitted to the outer peripheral surface of the inner casing 32, and the end 33B of the outer casing 33 covers the end of the inner casing 32. At this time, the ports A to D previously fixed to the end 33B of the outer casing 33 are inserted into the refrigerant flow paths 36a to 36d of the inner casing 32.

Next, a butting portion between the body 33A and the end 33B of the outer casing 33 is joined by welding or the like. Thereafter, the drive shaft 66 (see FIG. 2) is inserted into holes 33C and 32C formed in the outer casing 33 and the inner casing 32 and coupled to the valve body 60, and the drive unit 64 is attached to the drive shaft 66. A seal is provided between the drive shaft 66 and the outer casing 33 to prevent leakage of the refrigerant.

In the above assembling method, a step of bonding the two divided bodies 32A constituting the inner casing 32 by welding or the like is unnecessary. Therefore, the assembly work of the flow path switching unit 18 can be easily performed. The sealing between the outer surface 60a of the valve body 60 and the inner surface of the hollow portion 31A can be performed by the seal portions 34b to 34d only by accommodating the valve body 60 in the hollow portion 31A of the inner casing 32. Similarly, seal between the ports A to D and the refrigerant flow paths 36a to 36d can be performed by the seal portion 37 only by inserting the ports A to D fixed to the outer casing 33 into the refrigerant flow paths 36a to 36d of the inner casing 32. This also enables easy assembly work of the flow path switching unit 18.

### [Embodiment 2]

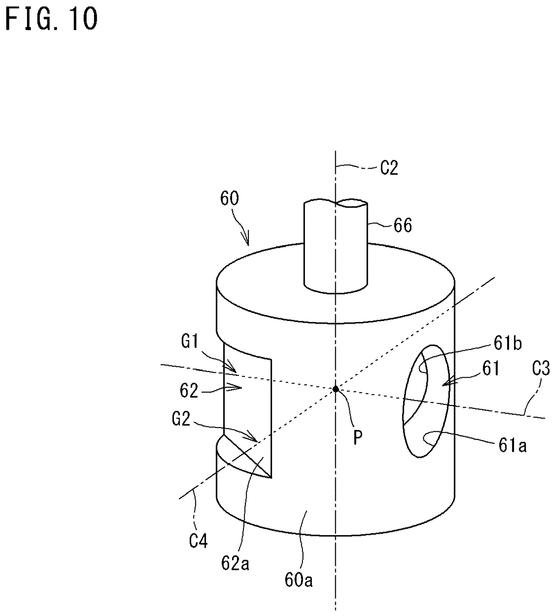

FIG.10 is a perspective view of a valve body of a flow path switching unit according to Embodiment 2.

In the present embodiment, the valve body 60 of the flow path switching unit (four-way switching valve) 18 has a cylindrical shape. An axial center of the cylindrical shape of the valve body 60 is the axial center C2. The through hole 61 and the concave portion 62 as in the valve body 60 according to Embodiment 1 are formed in the valve body 60. Although not shown, the hollow portion 31A of the casing 31 in which the valve body 60 is accommodated also has a cylindrical shape. The configuration of the flow path switching unit 18 other than the valve body 60 and the hollow portion 31A is similar to that of Embodiment 1.

### [Embodiment 3]

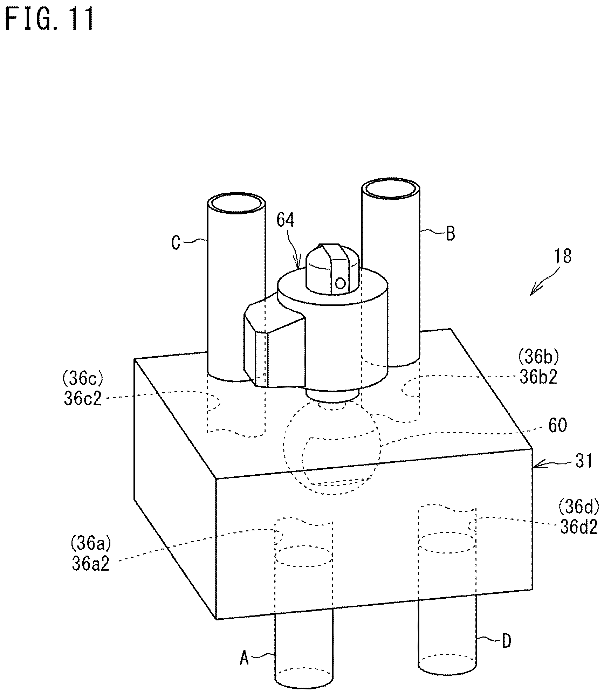

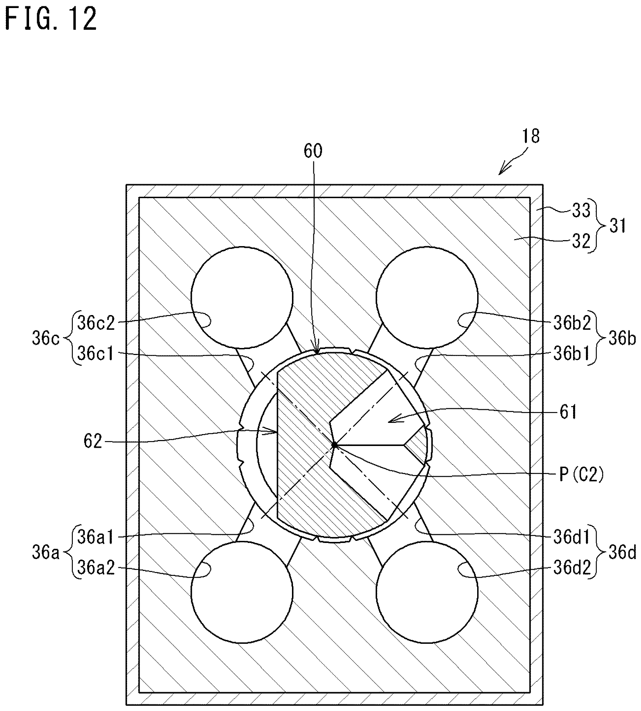

FIG. 11 is a perspective view of a flow path switching unit according to Embodiment 3. FIG. 12 is a sectional view of the flow path switching unit according to Embodiment 3.

The flow path switching unit 18 according to the present embodiment has a rectangular parallelepiped shape. A tubular port B and a tubular port C are provided on an upper surface of the flow path switching unit 18, and a tubular port A and a tubular port D are provided on a lower surface of the flow path switching unit 18. The refrigerant pipes 51, 52, 53, and 13 shown in FIG. 1 are connected to the ports A to D, respectively.

As in Embodiment 1, the flow path switching unit 18 according to the present embodiment includes the casing 31 and the valve body 60. The casing 31 includes the inner casing 32 made of synthetic resin and the outer casing 33 made of metal. These materials, production methods, and the like are similar to those of Embodiment 1. The inner casing 32 is a block having a rectangular parallelepiped shape. The inner casing 32 includes a plurality of member (divided bodies). The inner casing 32 is divided at an intermediate portion in an up-down direction, a front-rear direction, or a left-right direction.

The outer casing 33 covers the outer side of the inner casing. The outer casing 33 is a hollow box having a rectangular parallelepiped shape.

The plurality of refrigerant flow paths 36a to 36d is formed in the casing 31. The refrigerant flow paths 36a to 36d include lateral flow paths 36al, 36b1, 36c1, and 36d1 extending in a horizontal direction from the hollow portion 31A, and longitudinal flow paths 36a2, 36b2, 36c2, and 36d2 extending in the up-down direction from ends of the lateral flow paths 36a1 to 36d1. The longitudinal flow paths 36b2 and 36c2 of the refrigerant flow paths 36b and 36c extend upward from the lateral flow paths 36b1 and 36c1 and open at an upper surface of the casing 31. The longitudinal flow paths 36a2 and 36d2 of the refrigerant flow paths 36a and 36d extend downward from the lateral flow paths 36a1 and 36d1 and open at the lower surface of the casing 31.

The flow path switching unit 18 according to the present embodiment is similar to that of Embodiment 1 except for the configuration of the casing 31. Therefore, similar functional effects as those of the flow path switching unit 18 according to Embodiment 1 are obtained.

In the present embodiment, the ports B and D may be provided on a surface other than the upper surface (left and right side surfaces, front and rear side surfaces, and lower surface), and the ports A and D may be provided on a surface other than the lower surface (left and right side surfaces, front and rear side surfaces, and upper surface).

### [Other embodiments]

In the above embodiment, the seal portions 34a to 34d are formed on the inner surface of the hollow portion 31A in the inner casing 32, but may be integrally formed around the openings 61a and 61b of the through hole (passage) 61 in the outer surface 60a of the valve body 60. In this case, the distal ends of the seal portions 34a to 34d come into contact with the inner surface of the hollow portion 31A, and thus, leakage of the refrigerant into the gap between the outer surface 60a of the valve body 60 and the inner surface of the hollow portion 31A can be suppressed. The valve body 60 in which the seal portion is formed is preferably formed of a material having a tensile elastic modulus lower than the tensile elastic modulus of the material of the inner casing 32. It is therefore possible to suppress wear of the inner casing 32 due to contact with the seal portion of the valve body 60.

The seal portions 34a to 34d may be configured separately from the inner casing 32 and the valve body 60. In this case, an annular groove is formed in the inner surface of the hollow portion 31A or the outer surface 60a of the valve body 60, and an annular seal member is inserted into the groove to constitute the seal portion.

The flow path switching unit 18 according to the above embodiment is configured such that the high-pressure refrigerant flowing through the concave portion 62 and the refrigerant flow paths 36a, 36c, and 36d leaks to the gap between the inner surface of the hollow portion 31A and the outer surface 60a of the valve body 60 and to the outside of the inner casing 32. However, the flow path switching unit 18 may be configured such that these leaks do not occur.

In the valve body 60 according to the above embodiment, the through hole 61 constituting a passage for the low-pressure refrigerant and the concave portion 62 constituting a passage for the high-pressure refrigerant are formed. However, the present disclosure is not limited to this configuration. For example, the valve body 60 may have a concave portion as a passage for the low-pressure refrigerant or a through hole as a passage for the high-pressure refrigerant. The valve body 60 is not limited to the spherical shape and the columnar shape as described above, and may have other shapes such as a conical shape.

The axial center C2 of the valve body 60 may face the horizontal direction or the up-down direction. The axial center C2 of the valve body 60 may be oriented in a direction inclined with respect to the up-down direction and the horizontal direction.

In the above embodiment, the flow path switching unit 18 constitutes a four-way switching valve, but may constitute a three-way switching valve.

In the valve body 60, peripheral edges of the openings 61a and 61b of the through hole 61 can be chamfered in a tapered or rounded shape. It is therefore possible to suppress wear of the seal portions 34a to 34d when the seal portions 34a to 34d come into contact with the peripheral edges of the openings 61a and 61b. It is possible to suppress an increase in a rotational torque of the valve body 60 due to the peripheral edges of the openings 61a and 61b being caught by the seal portions 34a to 34d when the valve body 60 rotates.

The function as the shutoff valve by the flow path switching unit described in the above embodiment can also be applied to the liquid-side shutoff valve 23. For example, it is possible to adopt a configuration in which a flow path switching unit functioning as a liquid-side shutoff valve includes a valve body having a passage for a refrigerant and a casing that rotatably accommodates the valve body, and the valve body is rotated under the control of a controller to switch between a first state in which a flow path of the refrigerant between the expansion valve 17 and the indoor heat exchanger 21 is closed by an outer surface of the valve body and a second state in which the flow path of the refrigerant between the expansion valve 17 and the indoor heat exchanger 21 is communicated with the passage of the valve body.

### [Functional effects of embodiments]

(1) The heat source unit 11 according to the above embodiment is a heat source unit connected to the utilization unit 12 via the connection pipe 13, and includes the flow path switching unit 18 including a valve body 60 having a first passage (for example, the through hole 61 or the concave portion 62) through which the refrigerant flows, and the casing (for example, the inner casing 32) that rotatably accommodates the valve body 60 and has a first refrigerant flow path (for example, the refrigerant flow path 36d) through which the refrigerant flows; and the controller 26 that controls the rotation of the valve body 60. The connection pipe 13 is connected to the first refrigerant flow path 36d. The controller 26 controls the rotation of the valve body 60 between the first state (the third mode described above) in which the first refrigerant flow path 36d is closed by the outer surface 60a of the valve body 60 not having the first passage 61, 62 and the second state (the first or second mode described above) in which the first passage 61, 62 communicates with the first refrigerant flow path 36d.
   In this configuration, the first refrigerant flow path 36d to which the connection pipe 13 is connected can be closed by using the valve body 60 accommodated in the casing 32 of the flow path switching unit 18, and the flow path switching unit 18 can be substantially used as a shutoff valve. Therefore, the shutoff valve and the refrigerant pipe connected to the shutoff valve can be eliminated or reduced, and the heat source unit 11 can be downsized and reduced in cost.
(2) The heat source unit (1) further includes the pressing unit that presses the outer surface 60a of the valve body 60 against the periphery of the first refrigerant flow path 36d in the first state.
   In this configuration, the first refrigerant flow path 36d can be reliably closed by pressing the outer surface 60a of the valve body 60 against the periphery of the first refrigerant flow path 36d (specifically, the seal portion 34d).
(3) In the heat source unit according to (2), the pressing unit is the refrigerant leaking between the outer surface 60a of the valve body 60 and the inner surface of the casing 32 (the inner surface of the hollow portion 31A) in the second state.
   In this configuration, the valve body 60 can be pressed against the periphery of the first refrigerant flow path 36d by using the leaking refrigerant.
(4) In the heat source unit according to any one of (1) to (3), the second refrigerant flow path (for example, the refrigerant flow path 36a) and the third refrigerant flow path (for example, the refrigerant flow path 36b) through which the refrigerant flows are formed in the casing 32. In the second state, the controller 26 causes the first refrigerant flow path 36d and the second refrigerant flow path 36a or the first refrigerant flow path 36d and the third refrigerant flow path 36b to communicate with each other by the first passage 61, 62.
   In this configuration, a valve (three-way valve or the like) capable of switching and connecting at least three refrigerant flow paths can function as a shutoff valve.
(5) In the heat source unit of (4), a fourth refrigerant flow path (for example, the refrigerant flow path 36c) through which the refrigerant flows is formed in the casing 32, and a second passage (for example, the through hole 61 or the concave portion 62) through which the refrigerant flows is formed in the valve body 60. In the second state, the controller 26 causes the fourth refrigerant flow path 36c and the third refrigerant flow path 36b or the fourth refrigerant flow path 36c and the second refrigerant flow path 36a to communicate with each other by the second passages 61 and 62.
   In this configuration, a valve (four-way switching valve or the like) capable of switching and connecting at least four refrigerant flow paths can function as a shutoff valve.
(6) In the heat source unit according to any one of (1) to (5), the valve body 60 and the casing 32 are made of synthetic resin. The flow path switching unit 18 includes a second casing (for example, the outer casing 33) made of metal, the second casing covering the outside of the casing 32.

In this configuration, by forming the valve body 60 and the casing 32 with synthetic resin, weight reduction and formation of the first passage 61, 62 and the first refrigerant flow path 36d can be easily performed, and by providing the second casing 33 made of metal, pressure resistance of the casing made of synthetic resin can be supplemented.

While the embodiments have been described above, it will be understood that various changes in forms and details can be made without departing from the gist and scope of the claims.

### REFERENCE SIGNS LIST

- 11: outdoor unit (heat source unit)
- 12: indoor unit (utilization unit)
- 13: connection pipe
- 18: four-way switching valve (flow path switching unit)
- 26: controller
- 32: inner casing (casing)
- 33: outer casing (second casing)
- 36a: refrigerant flow path (second refrigerant flow path)
- 36b: refrigerant flow path (third refrigerant flow path)
- 36c: refrigerant flow path (fourth refrigerant flow path)
- 36d: refrigerant flow path (first refrigerant flow path)
- 60: valve body
- 60a: outer surface
- 61: through hole (first passage, second passage)
- 62: concave portion (first passage, second passage)

## Claims

1. A heat source unit connected to a utilization unit (12) via a connection pipe (13), the heat source unit comprising:
a flow path switching unit (18) including
a valve body (60) having a first passage (61, 62) through which a refrigerant flows, and
a casing (32) that rotatably accommodates the valve body (60) and has a first refrigerant flow path (36d) through which a refrigerant flows; and
a controller (26) that controls a rotation of the valve body (60),
wherein
the connection pipe (13) is connected to the first refrigerant flow path (36d), and
the controller (26) controls the rotation of the valve body (60) between a first state in which the first refrigerant flow path (36d) is closed by an outer surface (60a) of the valve body (60) not having the first passage (61, 62) and a second state in which the first passage (61, 62) communicates with the first refrigerant flow path (36d).

2. The heat source unit according to claim 1, further comprising a pressing unit that presses the outer surface (60a) of the valve body (60) against a periphery of the first refrigerant flow path (36d) in the first state.

3. The heat source unit according to claim 2, wherein the pressing unit is the refrigerant leaking between the outer surface (60a) of the valve body (60) and an inner surface of the casing (32) in the second state.

4. The heat source unit according to any one of claims 1 to 3, wherein
the casing (32) has a second refrigerant flow path (36a) and a third refrigerant flow path (36b) through which the refrigerant flows, and
in the second state, the controller (26) causes the first refrigerant flow path (36d) and the second refrigerant flow path (36a) or the first refrigerant flow path (36d) and the third refrigerant flow path (36b) to communicate with each other by the first passage (61, 62).

5. The heat source unit according to claim 4, wherein
the casing (32) has a fourth refrigerant flow path (36c) through which the refrigerant flows,
the valve body (60) has a second passage (61, 62) through which the refrigerant flows, and
in the second state, the controller (26) causes the fourth refrigerant flow path (36c) and the third refrigerant flow path (36b) or the fourth refrigerant flow path (36c) and the second refrigerant flow path (36a) to communicate with each other by the second passage (61, 62).

6. The heat source unit according to any one of claims 1 to 5, wherein
the valve body (31) and the casing (32) are made of synthetic resin, and
the flow path switching unit (18) includes a second casing (33) made of metal, the second casing (33) covering an outside of the casing (32).
